(19) Europäisches Patentamt / European Patent Office / Office européen des brevets

(11) **EP 1 708 387 B1**

(12) **EUROPÄISCHE PATENTSCHRIFT**

(45) Veröffentlichungstag und Bekanntmachung des Hinweises auf die Patenterteilung:
**30.05.2018 Patentblatt 2018/22**

(51) Int Cl.:
***H04B 7/08*** (2006.01)

(21) Anmeldenummer: **06002831.3**

(22) Anmeldetag: **13.02.2006**

(54) **Empfangsanlage mit Antennendiversity für digitale MPSK-modulierte Funksignale für Fahrzeuge**

Receiver apparatus with antenna diversity for digital MPSK-modulated radio signals for vehicles

Appareil récepteur avec diversité d'antennes pour des signaux radio numériques modulés en MPSK pour des voitures

(84) Benannte Vertragsstaaten:
**DE FR IT**

(30) Priorität: **13.02.2005 DE 102005006500**
**10.02.2006 DE 102006006266**

(43) Veröffentlichungstag der Anmeldung:
**04.10.2006 Patentblatt 2006/40**

(73) Patentinhaber: **Delphi Delco Electronics Europe GmbH**
**42119 Wuppertal (DE)**

(72) Erfinder:
• **Lindenmeier, Stefan**
**82131 Gauting-Buchendorf (DE)**
• **Lindenmeier, Heinz**
**82152 Planegg (DE)**

(74) Vertreter: **Manitz Finsterwald Patentanwälte PartmbB**
**Postfach 31 02 20**
**80102 München (DE)**

(56) Entgegenhaltungen:
**EP-A1- 0 454 585    EP-A1- 1 239 608**
**EP-A1- 1 455 466**

• **SADEGHI P ET AL: "Analysis of Pilot Symbol Assisted Modulation in Fading Channels Using Finite State Markov Models", SPREAD SPECTRUM TECHNIQUES AND APPLICATIONS, 2004 IEEE EIGHTH INTERNAT IONAL SYMPOSIUM ON SYDNEY, AUSTRALIA 30 AUG.-2 SEPT. 2004, PISCATAWAY, NJ, USA,IEEE, 30. August 2004 (2004-08-30), Seiten 458-461, XP010754987, DOI: 10.1109/ISSSTA.2004.1371742 ISBN: 978-0-7803-8408-8**

**Beschreibung**

Die Erfindung betrifft eine Empfangsanlage für ein Fahrzeug nach dem Oberbegriff des Anspruchs 1 (vgl. EP 1 239 608 A1). Für die Funkübertragung von digitalen Signalen im Frequenzbereich oberhalb 1 GHz kommt insbesondere das MPSK-Verfahren (Phase-Shift-Keying mit M Phasenzuständen) zur Anwendung. Hierbei wird für den Downlink einer Satellitenfunkverbindung aus energetischen Gründen häufig die QPSK-Modulation (4 Phasenzustände) gewählt, weil diese eine kleine Empfindlichkeit in Bezug auf Laufzeitdifferenzen zwischen sich überlagernden Signalen aufgrund der Mehrwegeausbreitung aufweist. (Die Ausführungen beziehen sich auf Erläuterungen zur Grundform dieses Modulationsverfahren, wie sie z.B. in "Digitale Mobilfunksysteme", K.David/T.Benkner vom Verlag B.G.Teubner Stuttgart 1996 auf S. 158 unter Kapitel 4.2.3 Phasenumtastung gegeben sind). Dies trifft z.B. für das Satellitenradiosystem SDARS zu, welches für den flächendeckenden mobilen Radioempfang in USA konzipiert ist. Dabei werden zur Rundfunkübertragung der gleiche Signalinhalt von 2 Satelliten in benachbarten Hochfrequenzbändern der gleichen HF-Kanalbandbreite B aber zeitlich zueinander versetzt ausgestrahlt. Aufgrund der Unsicherheit der Übertragung von den Satelliten zum terrestrischen Empfänger insbesondere in Fahrzeugen erfolgt zusätzlich zur Abstrahlung von den beiden Satelliten in Ballungsgebieten eine terrestrische Funkaussendung.

Es ist bekannt, dass der Datenstrom jeder digitalen Signalübertragung zur Synchronisation der Übertragung als "Burst-Signale" oder "Rahmendaten" bezeichnete Signale enthält, welche gemäß dem entsprechenden Standard festgelegt sind und wiederholend im zeitlichen Abstand der Rahmenperiode TR gesendet werden. Hierzu werden innerhalb eines Bursts in der Regel Präambelsignale gesendet und weitere sonstige den Dienst betreffende Signale, wobei die zeitliche Dauer TB des Burst-Signals 14 sowie die Häufigkeit seiner Aussendung durch die Rahmenfrequenz FR = 1/TR naturgemäß auf die Übertragung von Nutzinformation vermindernd eingeht. Weiterhin sind im Burst-Signal 14 Symbole enthalten, welche die Referenzphase zur Phasensynchronisation des Systems enthalten. Insbesondere um die sichere Synchronisation auf den Symboltakt auch bei hohen Geschwindigkeiten sicher zu stellen, ist sowohl die Rahmenfrequenz als auch die zeitliche Dauer TB des Burst-Signals 14 angemessen groß zu wählen.

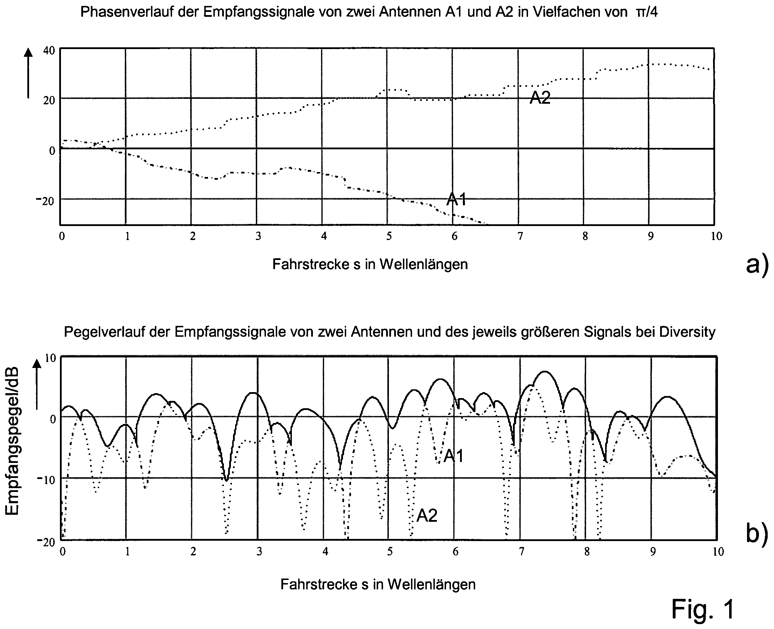

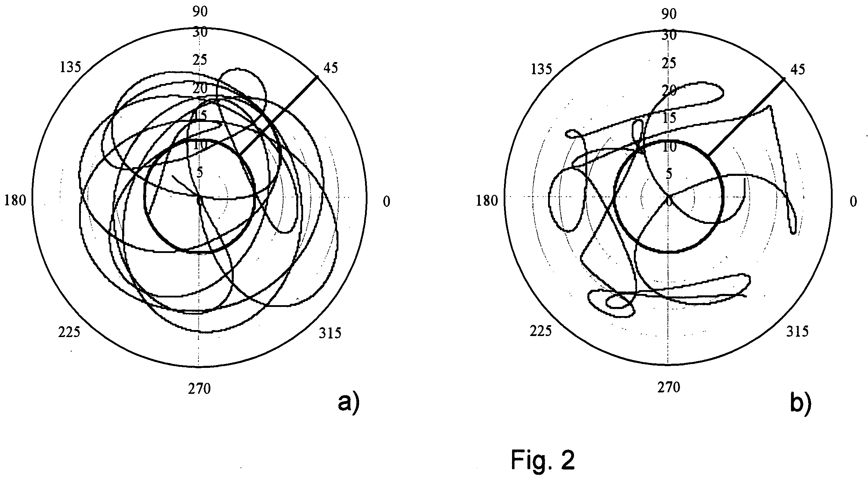

Die empfängerseitige Detektion der in den gesendeten Nutzsymbolen enthaltenen Trägerphasen kann im Empfänger dann gesichert stattfinden, wenn das Nutz-Störverhältnis hinreichend groß ist und das System durch die Burst-Signale 14 auf den Symboltakt synchronisiert ist. Wäre dies zu jedem Zeitpunkt sicher gestellt, dann könnte auf Redundanz weitgehend verzichtet werden. Ein grundsätzliches Problem ergibt sich jedoch aus dem Sachverhalt, dass die Trägerphase in einem durch Mehrwegeausbreitung gestörten Empfangsfeld über der Fahrstrecke s sehr stark schwankt, wobei diese Schwankungen zu Fehldetektionen der Symbole führen, wenn z. B. bei einem 4PSK-System der Fehlphasenhub nicht kleiner ist als $\pm \pi/4$. In Fig. 1a ist der Phasenverlauf der Empfangssignale in Vielfachen von $\pi/4$ von zwei Antennen A1 und A2 über der Wegstrecke s in Vielfachen der Wellenlänge $\lambda$ aufgetragen. Zum Vergleich hierzu sind in Fig. 1b die zugehörigen Pegelverläufe dieser Antennen dargestellt. Zusätzlich ist in Figur 1b der zum jeweiligen Zeitpunkt auftretende größere Wert der beiden Empfangspegel als stark ausgezogene Kurve dargestellt. Bei senderseitiger Aussendung von Symbolen mit gleich bleibender Phase - z.B. im Phasenzustand $\pi/4$ - ergäbe sich empfängerseitig bei Verwendung jeweils einer der beiden Antennen A1 und A2 am Fahrzeug ein Hochfrequenzträger als Empfangssignal mit den in den Polardiagrammen in den Figuren 2a und 2b beispielhaft dargestellten stochastischen Phasen- und Amplitudenverläufen im bewegten Fahrzeug. Mit Hilfe einer nach dem Stande der Technik bei Empfang mit nur einer Antenne im Empfänger hierfür vorhandenen Phasenregelung werden deshalb die Phasenänderungen längs der Fahrstrecke kontinuierlich ausgeregelt. Dies geschieht im Betrieb z.B. auf der Basis, dass jedes der aufeinander folgend gesendeten Symbole einen der vier vorgesehenen Phasenzustände annehmen sollte und die Abweichung davon von Symbol zu Symbol nachgeregelt wird. Solche Phasenregelungen sind jedoch störungsanfällig und verlieren insbesondere bei Pegelschwund häufig die richtige Bezugsphase zur richtigen Detektion der Symbole bis wieder ein Burst-Signal 14 zur Resynchronisation gesendet wird. Die Phasenverläufe in Figur 1a zeigen deutlich, wie sich die Phasen der Empfangssignale bereits nach kurzen Wegstrecken deutlich unterscheiden und divergieren. Eine derartige Phasenregeleinrichtungen, welche die Bezugsphase für ein Antennensignal verfolgt, besitzt den Nachteil, dass sie bei Wechsel des Antennensignals bei geschaltetem Antennendiversity und beliebig gewähltem Zeitpunkt für diesen Wechsel die Referenzphase zunächst verliert und ein längerer Resynchronisationsvorgang stattfindet, womit zwangsweise eine erhöhte Bitfehlerrate verbunden ist.

Der Erfindung liegt die Aufgabe zugrunde, eine Empfangsanlage mit Antennendiversity nach dem Oberbegriff des Hauptanspruchs anzugeben, welche den Nachteil dieser Phasenregelung nicht besitzt und bei Wechsel des Antennensignals Bitfehler durch falsch detektierte Nutzsymbole weitgehend vermeidet.

Diese Aufgabe wird durch die Merkmale des Hauptanspruchs gelöst.

Die Erfindung wird im Folgenden an Hand von Ausführungsbeispielen näher erläutert. In den zugehörigen Zeichnungen zeigen:

Figur 1

a) Phasenverlauf der Empfangssignale von zwei Antennen auf einem Fahrzeug in einem Gebiet mit Mehrwegeempfang über der Fahrstrecke s.

b) Verlauf der Empfangspegel der Antennen A1 und A2 in Figur a) und der Verlauf des größeren der beiden Empfangspegel (stark ausgezogene Kurve)

Figur 2

a) Stochastischer Phasen- und Amplitudenverlauf einer Antenne A1 im bewegten Fahrzeug bei senderseitiger Aussendung von Symbolen mit gleich bleibender Phase; z.B. im Phasenzustand $\pi/4$.

b) entsprechender stochastischer Phasen- und Amplitudenverlauf einer Antenne A2 auf demselben Fahrzeug.

Figur 3

a) Verlauf der Empfangspegel wie in Figur 1b) mit der als Striche angedeuteten Folge der Phasen-Referenzsignale 15 in Abständen von $\lambda/20$. Die ausgezogene Kurve repräsentiert den Verlauf des Empfangspegels bei Ermöglichung des Antennenwechsels in Abständen von $\lambda/20$ im Diversity-Modus.

b) Gepunktete Kurve: Phasenfehler beim Empfang mit nur einer Antenne und der wiederholenden Aktualisierung der Bezugsphase im Empfänger in Abständen von jeweils $\lambda/20$ über der Fahrstrecke s nach der Erfindung in Vielfachen von $\pi/4$. Ausgezogene Kurve: Abweichung vom wahren Wert der Phase bei Ermöglichung des Antennenwechsels in Abständen von $\lambda/20$ im Diversity-Modus mit zwei Antennen nach der Erfindung. Überschreitung der Schwellen bei $\pm 1$ führt zur Fehldetektion der Symbole.

Figur 4

a) Phasen- und Amplitudenverlauf des Hochfrequenzzeigers beim Empfang mit einer Antenne und Aktualisierung der Bezugsphase nach der Erfindung in Abständen von $\lambda/20$ bei Aussendung von Symbolen mit gleich bleibender Phase im Phasenzustand $\pi/4$. Signale innerhalb des stark ausgezogenen Kreises können nicht richtig detektiert werden.

b) Phasen- und Amplitudenverlauf des Hochfrequenzzeigers wie in a) jedoch beim Empfang mit Antennen Diversity mit zwei Antennen und Ermöglichung des Antennenwechsels in Abständen von $\lambda/20$ nach der Erfindung. Signale mit zu kleinen Pegeln innerhalb des stark ausgezogenen Kreises treten nicht auf.

Figur 5

a) Grundform einer Empfangsanlage mit Diversity-Antennenanlage 7 mit Antennenanlage 1, Antennen-Wechselschalter 2 und Empfänger 3 nach der Erfindung mit logic-Schaltung 12, Signalpegelprüfeinrichtung 8 und MPSK-Demodulator 19.
b) MPSK-Demodulator 19 nach der Erfindung mit Synchronmodulatoren 22 und Tiefpassfilter 25 zur Gewinnung der detektierten Inphase-Komponente I1 und der detektierten Quadraturphase-Komponente Q1 mit Rechnereinrichtung 27 zur rechnerischen Korrektur der Phasen der empfangenen Symbole anhand in geeigneten Zeitabständen gesendeter detektierter Pilotsymbol- Phasenwinkel $\Phi_p$.

Figur 6

a) Zeitlicher Ablauf einer besonders vorteilhaften Signalstruktur gemäß der Erfindung mit Pilotsymbolen 16 als Phasen-Referenzsignale 15 zwischen aufeinander folgenden Burst-Signalen 14 mit Phasen-Referenzsignalen 15 und Zeitpunkten 17 für den möglichen Antennenwechsel jeweils im zeitlichen Abstand TW.

b) Zeitlicher Ablauf einer besonders vorteilhaften Signalstruktur gemäß der Erfindung wie in a) jedoch ausschließlich mit in geeigneten zeitlichen Abständen TW gesendeten Burst-Signalen 14.

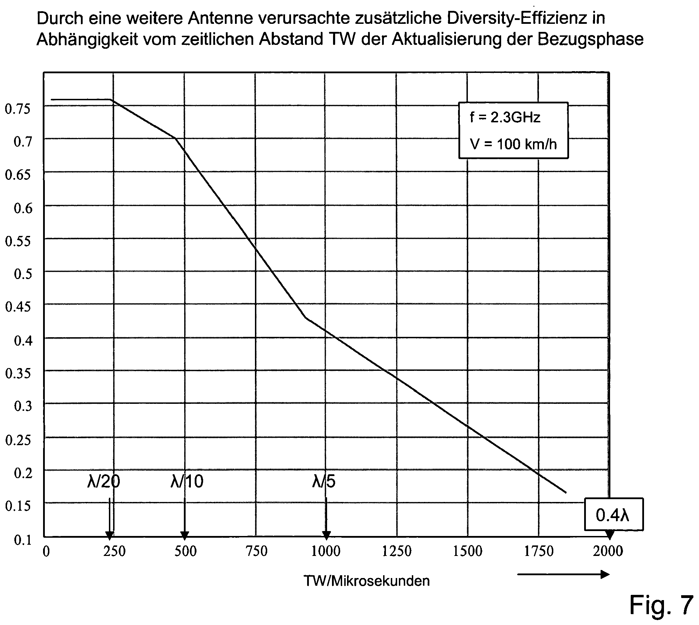

Figur 7 Abnahme der Diversity-Effizienz über dem Zeit-Intervall TW/$\mu$s zwischen wiederholend möglichen Antennenwechseln wenn TW größer gewählt ist als entsprechend einem zurückgelegten Weg von $\lambda/20$.

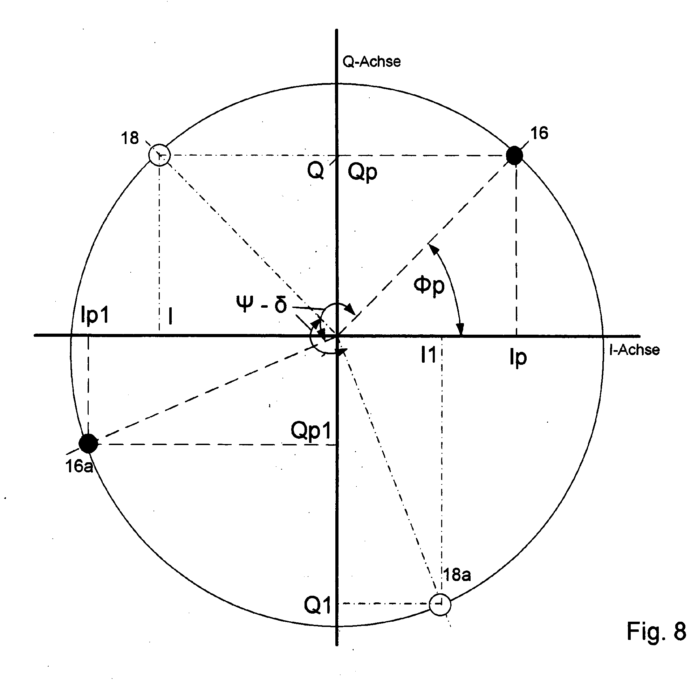

Figur 8 Diagramm der Phase eines unter dem bekannten Phasenwinkel Φp senderseitig als Phasen-Referenzsignal 15 ausgestrahlten Pilotsymbols 16 mit den wahren Werten der Inphase-Komponente Ip und der Quadraturphase-Komponente Qp und den am Ausgang der Synchronmodulatoren 22 vorliegenden Werten der Inphase-Komponente Ip1 und der Quadraturphase-Komponente Qp1 des empfangenen Pilotsymbols 16a zur rechnerischen Ermittlung des Phasenunterschieds ψ-δ in der Rechnereinrichtung 27a. Die wahren Werte der Komponenten I und Q der aufeinander folgend ausgesendeten Nutzsymbole 18 werden aus den empfangenen Komponenten I1 und Q1 des empfangenen Nutzsymbols 18a in der Rechnereinrichtung 27a laufend berechnet.

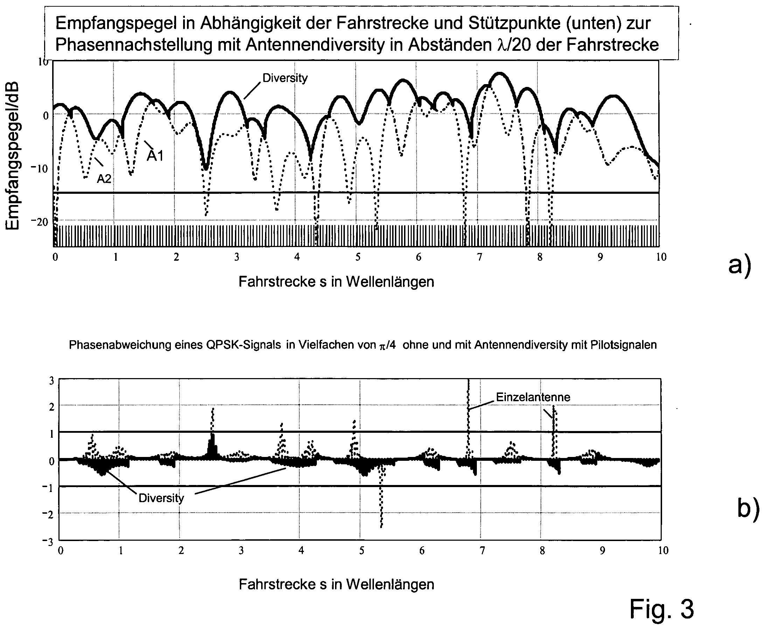

Für die Erfindung ist es wesentlich, dass in einem zeitlichen Abstand Phasen-Referenzsignale 15 wiederholend ausgesendet sind derart, dass bei höchster Fahrgeschwindigkeit hinreichend kleine Phasenfehler für die Detektion auftreten. Dies geht anschaulich aus Fig. 3 hervor. Darin sind in Fig. 3a unten die Folge der Phasen-Referenzsignale 15 als Striche angedeutet, welche in Abständen von λ/20 auftreten und die Referenzphase für die nachfolgenden Symbole richtig im Empfänger vorliegt. Darüber sind in Fig. 3a in gepunkteten und strich-punktierten Kurven die Hochfrequenzpegel eingetragen. In Fig. 3b ist der dem gepunkteten Pegelsignal zugeordnete Phasenverlauf im Empfänger in Vielfachen von π/4 gepunktet gezeigt, wenn die Aktualisierung der Referenzphasen gemäß der Erfindung in Abständen von λ/20 erfolgt. Bei Überschreitung des dargestellten Phasenwertes von ±1 wird das empfangene Signal einem nicht zutreffenden Quadranten zugeordnet und es erfolgt Fehldetektion. Die Phasen-Referenzsignale 15 können dabei entweder durch Burst-Signale 14 gebildet sein, welche im Abstand von λ/20 bezogen auf die höchste Fahrgeschwindigkeit gestaltet sind oder durch die im Folgenden begründeten Pilotsymbole 16.

Es ergibt sich also zwangsweise, dass die für die Nutzdatenübertragung verfügbare Zeit auf den Wert (1-FR*TB) reduziert ist. Um die Synchronisation und somit die Übertragung möglichst sicher zu gestalten wird man den Wert FR*TB möglichst groß wählen wollen, so dass die Synchronisation des Empfangskanals mit der Bandbreite B auf die Symbolfrequenz 1/T ~ B der einzelnen 4PSK-Symbole möglichst sicher erfolgt. Andererseits ist der für die Übertragung der Nutzinformation zur Verfügung stehende Kanal um FR*TB*100% reduziert. Eine weitere Reduzierung der effektiven Kanalkapazität erfährt das System durch die notwendige Redundanz der verwendet Übertragungs-Codes, deren Anwendung für ein mobiles System zwingend notwendig ist aufgrund des Datenverlusts, welcher in der Folge von Pegeleinbrüchen aufgrund von Mehrwegeausbreitung und den damit im Zusammenhang stehenden Phasenfehlern auftritt. Die für die Sicherheit der Übertragung in Kauf genommene Reduzierung der effektiv übertragbaren Nutzinformation, d.h. der effektiven Kanalkapazität, ist somit eine wichtige Eigenschaft des digitalen Übertragungssystems.

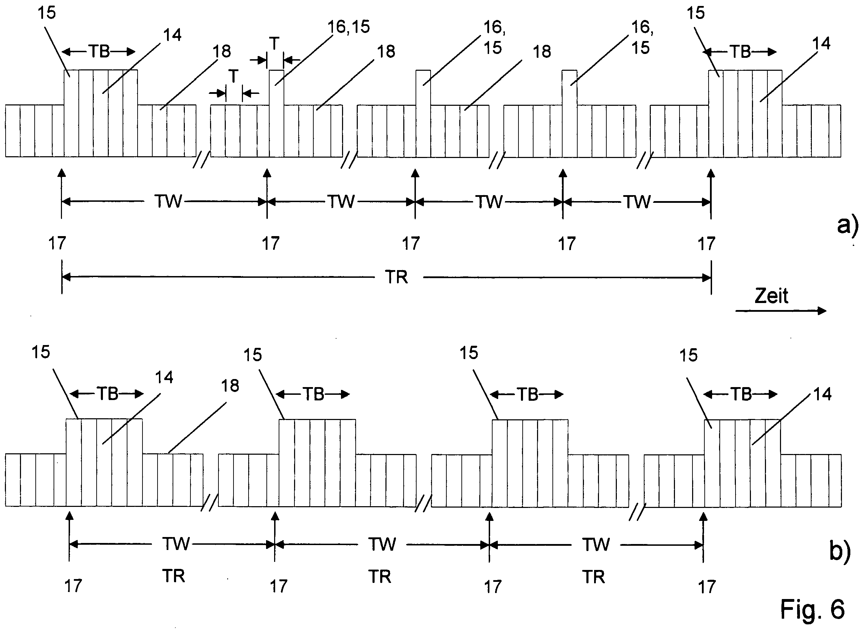

Um diesen Nachteil der starken Reduzierung der Kanalkapazität zu vermeiden, werden gemäß dem Erfindungsgedanken im Empfänger 3 zwischen den Burst-Signalen 14 im geeigneten zeitlichen Abstand voneinander in den Datenstrom eingebrachten Pilotsymbolen 16 als Phasen-Referenzsignale 15 ausgewertet. Die Pilotsymbole 16 werden mit einem definierten Pilotsymbol- Phasenwinkel Φp übertragen, welcher für die phasenrichtige Phasendetektion der darauf folgenden Nutzsymbole 18 herangezogen wird, bis wieder ein Pilotsymbol 16 bzw. ein Burst-Signal 14 empfangen wird usw. Ein solches Schema über den zeitlichen Ablauf gemäß der Erfindung ist in Fig. 6a für eine besonders vorteilhafte Signalstruktur mit Pilotsymbolen 16 und in Fig. 6b ausschließlich mit in geeigneten zeitlichen Abständen TW gesendeten Burst-Signalen 14 dargestellt. Um den Vorteil der Erfindung vollständig auszunützen, ist der zeitliche Abstand TW der gesendeten Pilotsymbole 16 bzw. der Burst-Signale 14 in Fig. 6b (TW = TR) dabei derart zu wählen, dass bei der höchsten Fahrgeschwindigkeit die zurückgelegte Wegstrecke nicht größer ist als 1/20 der Wellenlänge λ. Ein wesentlicher Vorteil der erfindungsgemäßen Lösung gemäß Fig. 6a besteht darin, dass trotz der in weiteren zeitlichen Abständen voneinander gesendeten Burst-Signalen 14 die Synchronisation des Empfangssystems wirkungsvoll ist und gleichermaßen die Bezugsphase anhand der zeitlich eingefügten Pilotsymbole 16 in hinreichend kleinen zeitlichen Abständen aktualisiert ist. In der Praxis kann in der Regel ein einziges Pilotsymbol 16 zwischen aufeinander folgenden Burst-Signalen 14 zur sicheren Gewinnung der aktuellen Referenzphase als Grundlage für die richtige Detektion der nachfolgend empfangenen Nutzsymbole genügen, bis wieder ein Pilotsymbol 16 bzw. ein Burst-Signal 14 folgt.

Im Folgenden soll der erzielbare Gewinn an effektiver Kanalkapazität anhand eines Beispiels erläutert werden, wenn als Phasen-Referenzsignale zeitlich zwischen den Burst-Signalen 14 Pilotsignale eingesetzt und ausgewertet werden. Der zeitliche Ablauf eines Signals ohne Pilotsymbole 16 ist in Fig.6b dargestellt und soll beispielhaft für hohe Fahrgeschwindigkeiten von maximal ca. 100 km/h und einer Wellenlänge λ ~ 12,8 cm betrachtet werden, wenn die erfindungsgemäße Bedingung nicht eingehalten ist. Zur sicheren Synchronisation des Empfängers werden häufig Burst-Signale 14 der Länge von 30 - 50 Symbolen (zeitlich TB) eingesetzt. Setzt man für einen gesamten Rahmen realistische Werte von etwa 4000 Symbolen (zeitlich TR) an, so verbleiben etwa 3950 Nutzsymbole pro Rahmen. Für die Synchronisation wird z.B. bei 40 Symbolen somit 1% der gesamten Kanalkapazität für die Synchronisation eingesetzt. Bei einer Kanalbandbreite von B = 2 MHz und einer daraus resultierenden Symboldauer T = 1B ~ 0.5 μs ergibt sich hieraus eine zeitliche Dauer TR des gesamten Rahmens von TR = 4000*0.5 μs = 2000 μs und somit ein zeitlicher Abstand zwischen aufeinander folgenden Burst-Signalen 14 für eine Aktualisierung der Referenzphase. Der auf die Wellenlänge bezogene zurückgelegte Weg in dieser Zeit beträgt etwa 0,4λ und ist wesentlich zu groß, um ohne die genannte nachführende Regelung eine fehlerhafte Detektionen der Symbole zu vermeiden.

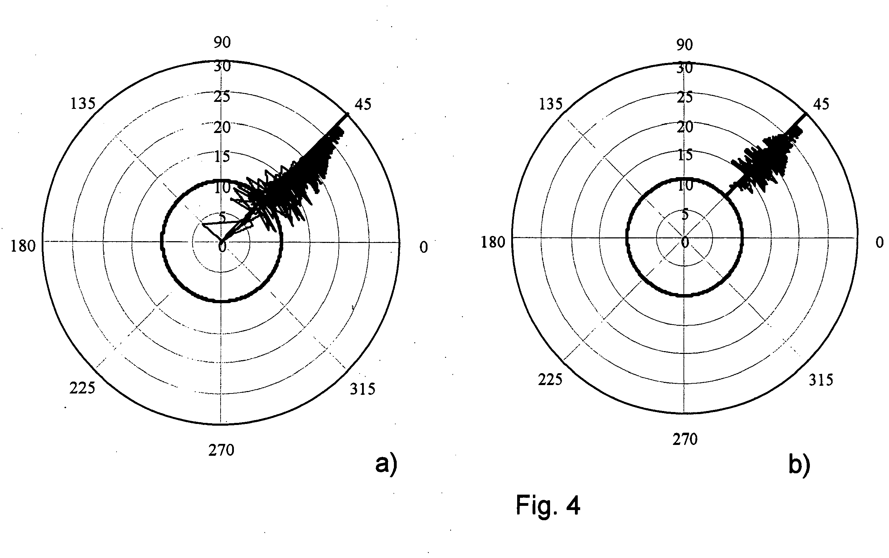

Beim Einsatz von z.B. 7 über die Rahmendauer TR etwa gleich verteilten Pilot-symbolen 16 nach der Erfindung, wie in Fig. 6a, dagegen kann bei der Rahmendauer TR = 2000μs für die Symboltaktsynchronisation die Phase derart wiederholend aktualisiert werden, dass bei dem sich ergebenden Zeitabstand von ca. 250 μs die Referenzphase bei der angegebenen Geschwindigkeit in Wegabständen von λ/20 vorliegt. In Fig. 4a ist, entsprechend der Darstellung in Fig. 2a der Phasen- und Amplitudenverlauf des Hochfrequenzzeigers jedoch bei Anwendung der Phasen-Referenzsignale 15 gemäß der Erfindung in Fig. 6a dargestellt, wenn permanent Symbole mit gleich bleibender Phase - z.B. im Phasenzustand π/4 - aneinander gereiht ausgesendet würden und sich das Fahrzeug mit 100km/h bewegt. Der verbleibende Fehlphasenhub ist auch bei höchster Fahrgeschwindigkeit klein genug, um Fehldetektionen zu vermeiden. Der mit 10dB gekennzeichnete Kreis beschreibt die Grenze der Detektierbarkeit der Symbole bezüglich des erforderlichen Signal/Störabstandes. Signale, welche innerhalb des Kreises fallen, führen zu Bitfehlern. Die oben erwähnte technisch anfällige schnelle Nachverfolgung der Phase nach dem Stand der Technik kann aufgrund des kleinen Restphasenfehlers somit vorteilhaft entfallen. Die Reduktion von Kanalkapazität von 1% auf 57/4000 = 1,17 % ist unwesentlich und wird durch die wesentlich sicherere Detektion der Symbole weit mehr als nur kompensiert. Die Sendung jeweils eines vollständigen Burst-Signals 14 ohne Pilotsymbole 16 in einem zeitlichen Abstand von 250 μs dagegen würde eine nicht tolerierbare Reduktion von Kanalkapazität von ca. 8 % mit sich bringen.

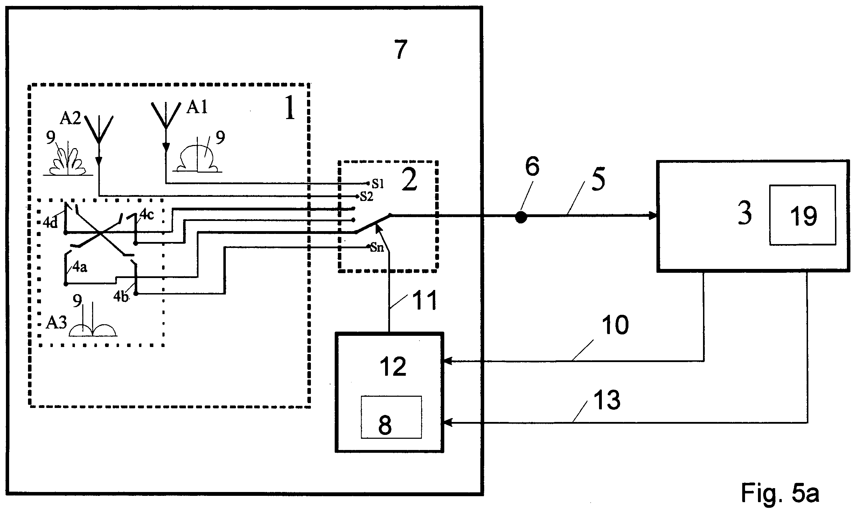

Die wesentliche Aufgabe der Erfindung ist ihre Wirkung bezüglich des Antennenwechsels bei einem schnell schaltenden Antennendiversity-System, wie es z.B in EP 1 239 608 A1 und in EP 1 394 965 A1 für den Empfang digitaler terrestrischer und/oder Satelliten-Funksignale für Fahrzeuge beschrieben ist. Die Grundform eines derartigen Antennendiversity-Systems ist in Fig. 5a dargestellt. Die Antennenanlage 1 kann aus mehreren einzelnen Antennen A1,A2,A3,...oder aus mehreren Antennenteilen 4a,4b,4c.. bestehen, wobei sich zum Beispiel unterschiedliche sektorale Richtdiagramme 9 gestalten lassen.

Das an der Antennenanschlussstelle 6 auftretende Empfangssignal 5 wird dem Empfänger 3 zugeleitet und der Empfangspegel 13 der aktuell durchgeschalteten Antenne A1,A2,A3,... jeweils ermittelt und einer logic-Schaltung 12 zugeführt. Die logic-Schaltung 12 ist dabei derart gestaltet, dass der aktuelle Empfangspegel 13 mit den Empfangspegeln 13 der vorher aufgeschalteten Antenne A1,A2,A3,... mit Hilfe einer in der logic-Schaltung 12 vorhandenen Signalpegelprüfeinrichtung 8 verglichen wird. Anhand dieses Vergleichs wird in der logic-Schaltung 12 eine Rangliste bezüglich der Größe der Empfangspegel 13 der Antennen A1,A2,A3,... ermittelt. Unterschreitet der Empfangspegel der aufgeschalteten Antenne einen für die sichere Detektion notwendigen Wert, so ist dies ein sinnvolles Kriterium für die Vorbereitung des Antennenwechsels, welcher durch Erzeugung eines Wechsel-Signals 11 herbeigeführt wird. Der Antennenwechsel soll jedoch nur dann stattfinden, wenn in unmittelbarer zeitlicher Nähe ein Phasen-Referenzsignale 15 folgt. Aus diesem Grund ist der Antennenwechsel blockiert mit Ausnahme jeweils eines Zeitintervalls unmittelbar vor jeder Aktualisierung der Bezugsphase von möglichst kleiner zeitlicher Länge. Es sollte jedoch nicht mehr als 1/4 bis 1/6 der Länge des zeitlichen Abstands TW zwischen zeitlich aufeinander folgenden Aktualisierungen der Bezugsphase besitzen Als Kriterium zur Feststellung der Notwendigkeit des Antennenwechsels kann die Unterschreitung eines für die sichere Detektion der empfangenen Signale notwendigen Pegels bestehen und der Antennenwechsel zu einer anderen Antenne - vorzugsweise zu der die Rangliste anführenden Antenne - im Zeitintervall unmittelbar vor der darauf folgenden Aktualisierung der Bezugsphase erfolgen.

Der Vergleich mit den Signalpegeln der übrigen Antennen findet in einem "Pegelprüfvorgang" durch extrem schnelles Umschalten des Wechselschalters 2 über eine sehr kurze Pegelprüfzeit - welche im Idealfall kleiner ist als die Symbolzeit T - statt mit nachfolgend extrem schnellem Rückschalten auf das ursprünglich angeschaltete Antennensignal. Die vergleichende Feststellung der Empfangspegel 13 der Antennen A1,A2,A3,... erfolgt somit erfindungsgemäß durch kurzzeitiges Umschalten des Antennen-Wechselschalters 2 von der aktuell aufgeschalteten Antenne auf die jeweils im Hinblick auf ihren Empfangspegel zu vergleichende Antenne und jeweils durch möglichst kurzzeitige Erfassung einer Empfangspegel-Probe zur Vorbereitung eines möglichen Antennenwechsels in dem Zeitraum, welcher für den Antennenwechsel blockiert ist. Durch extrem schnelles Umschalten und schnelles Rückschalten auf die ursprünglich aufgeschaltete Antenne während der Übertragung der Nutzdaten wird bewirkt, dass Letztere durch den Pegelprüfvorgang möglichst wenig beeinträchtigt werden.

Aufgrund des Verharrens auf dem ursprünglich angeschalteten Antennensignal nach der Pegelprüfzeit wird die Referenzphase für die nachfolgend detektierten Signale durch den Pegelprüfvorgang nicht gestört. Solche Pegelprüfvorgänge können in hinreichend kleinen Zeitabständen durchgeführt werden, ohne den Empfang störend zu beeinflussen, so dass in einem in der "logic"-Schaltung enthaltenen memory die Pegel der Signale hinreichend aktualisiert vorliegen. Wählt man z.B. als Kriterium für die Notwendigkeit eines Antennenwechsels das Unterschreiten eines bestimmten vorgegebenen Empfangspegels, so kann die "logic"-Schaltung diese Notwendigkeit durch ein Wechsel-Signal anzeigen. Soll z.B. das größte Signal als Kriterium gewählt werden, so kann die "logic"-Schaltung somit anhand von vergleichenden Pegelprüfvorgängen die Notwendigkeit eines Antennenwechsels durch das Wechsel-Signal anzeigen. Erfindungsgemäß kann der Antennenwechsel jedoch nur im Zusammenhang mit dem Auftreten eines Phasen-Referenzsignals 15 durchgeführt werden, damit die Referenzphase für das Antennensignal nach dem Antennenwechsel für die Detektion der nachfolgenden Symbole zur Verfügung steht. In besonders effektiven Ausführungsformen der Erfindung

EP 1 708 387 B1

wird deshalb der Antennenwechsel im letzten bzw. einem der letzten vor dem Auftreten eines Phasen-Referenzsignals durch die "logic"-Schaltung herbeigeführt. Aufgrund des bezüglich der Taktzeiten vernachlässigbaren Laufzeitunterschieds der unterschiedlichen Antennensignale auf dem Fahrzeug sind die Taktsignale in allen Antennen auf dem Fahrzeug als technisch identisch anzusehen. Die geringen Laufzeitunterschiede führen jedoch bezüglich der Hochfrequenzträgerphasen zu den Problemen, welche mit der Erfindung vermieden werden.

In einer besonders vorteilhaften Ausgestaltung einer Diversity-Empfangsanlage nach der Erfindung wird der Antennenwechsel, welcher vorzugsweise synchron mit dem Symboltakt zu erfolgen hat, nunmehr am günstigsten am zeitlichen Ende des letzten, vor dem Pilotsymbol 16 bzw. dem Burst-Signal 14 auftretenden Nutzsymbol durchgeführt und mit dem unmittelbar darauf folgenden Pilotsymbol 16 die neue Referenzphase im Empfänger detektiert und beibehalten, so dass alle darauf folgenden Symbole bis zum nächsten Pilotsignal auf der Basis dieser Referenzphase richtig detektiert werden. Der Phasensprung, welcher mit der Umschaltung von einer Antenne zur anderen Antenne gegeben ist, wird somit durch gleichzeitige Neuorientierung die für die andere Antenne zutreffende Referenzphase Rechnung getragen. Damit können Bitfehler, welche durch die Antennenumschaltung bedingt wären, vollkommen vermieden werden, sofern nicht beide Antennen gleichzeitig einem Pegeleinbruch unterliegen.

Die vorteilhafte Wirkungsweise eines Antennendiversity-Systems nach der Erfindung mit Auswahl nach dem größten Signalpegel ist anschaulich gezeigt durch den in ausgezogener Kurve dargestellten Pegelverlauf in Fig.3a, welcher den jeweils größeren Pegel der beiden Antennen beschreibt, sowie den ebenso in schwarzer Farbe dargestellten zugehörigen Phasenverlauf in Fig.3b. Die rote Linie in Fig 3 a stellt bei -10dB die Pegelgrenze nach unten bezüglich der Detektierbarkeit dar. Es ist erkennbar, dass das Diversity-System ausschließlich bei einem gleichzeitig auftretenden Pegeleinbruch beider Antennensignale (Marke 2500) sowohl bezüglich eine Phasenfehldetektion als auch einer Amplitudenfehldetektion infolge von Rauschen gefährdet ist. Deshalb empfiehlt es sich, mehrere Antennensignale für Antennendiversity zur Verfügung zu stellen. In Fig. 4b sind, entsprechend der Darstellung in Fig. 4a der Phasen- und Amplitudenverlauf des Hochfrequenzzeigers bei Anwendung der vorliegenden Erfindung mit Antennendiversity dargestellt, wenn permanent Symbole mit gleich bleibender Phase - z.B. im Phasenzustand $\pi/4$ - aneinander gereiht ausgesendet werden und sich das Fahrzeug mit 100km/h bewegt. In diesem Fall treten weder Amplituden- noch Phasenfehler auf und alle Symbole werden richtig detektiert.

Die Diversity-Effizienz ist ein Maß für die Wirksamkeit von Antennendiversity und kann bei einem geschalteten Antennendiversity die Zahl der physikalisch verfügbaren Antennensignale nicht überschreiten. In Fig. 7 ist die Abnahme der Diversity-Effizienz über dem Intervall TW/$\mu$s möglicher Antennenwechsel aufgetragen und zeigt für ein Beispiel den Abfall bei der Höchstgeschwindigkeit, wenn TW größer gewählt ist als entsprechend einem zurückgelegten Weg von $\lambda/20$.

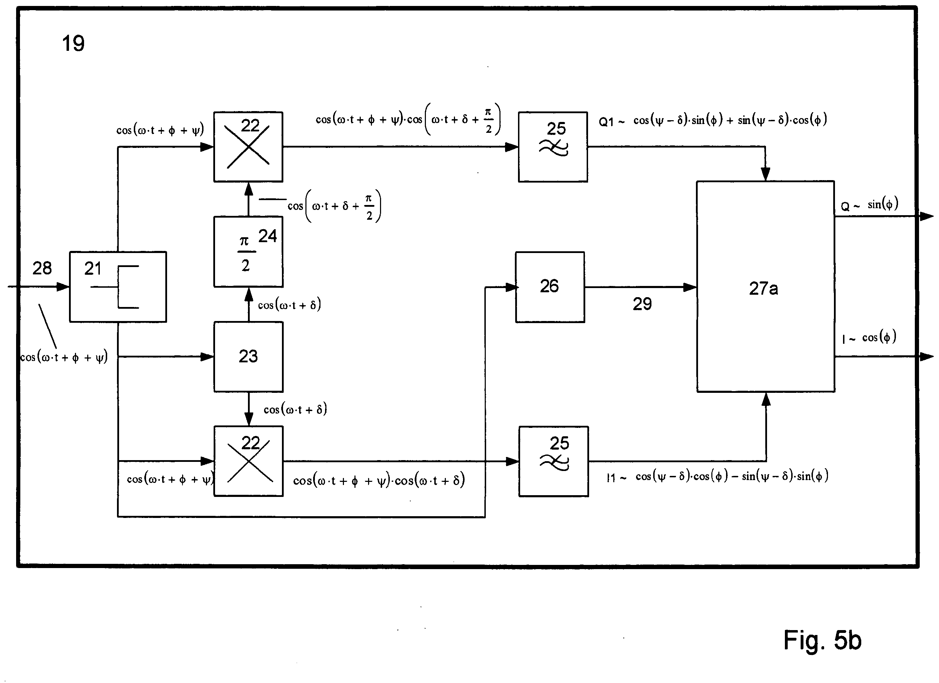

Im Folgenden wird an Hand der Figuren 5b und 8 beispielhaft erläutert, auf welche Weise in einer vorteilhaften Ausgestaltung der Erfindung die Aktualisierung der Referenzphase zur Vorbereitung des Antennenwechsels erfolgen kann.

Fig. 5b zeigt den Aufbau eines MPSK-Demodulators 19 nach der Erfindung, dessen Demodulator-Eingangssignal 28, welches in der Regel das Empfangssignal in der Zwischenfrequenzebene darstellt, einer Signalverzweigung 21 zugeführt und jeweils an einen von zwei Synchronmodulatoren 22 sowie an eine Einrichtung zur Trägerfrequenzsignal-Gewinnung 23 und an eine Einrichtung zur Taktableitung 26 weitergeleitet. Das Ausgangssignal der Trägerfrequenzsignal-Gewinnung 23 wird in einem der beiden Synchronmodulatoren 22 in der Ursprungsphase und in dem anderen - mit Hilfe des $\pi/2$-Phasendrehglieds 24 um den Winkel $\pi/2$ gedreht - dem Eingangssignal überlagert. Die Ausgangssignale der Synchronmodulatoren 22 werden jeweils nach einer Filterung in einem Tiefpassfilter 25 der Rechnereinrichtung 27a zugeführt sind und in dieser, gesteuert durch den Symboltakt 29 am Ausgang der Taktableitung 26, umgerechnet. Es werden also die empfangenen Werten der Inphase-Komponente Ip1 bzw. I1 und der Quadraturkomponente Qp1 bzw. Q1 in die jeweils wahren Werte der Inphase-Komponente I bzw. Ip und der Quadraturkomponente Qp bzw. Q umgerechnet, welche somit am Ausgang des MPSK-Demodulators 19 vorliegen. Die hierfür notwendige einfache Beziehung für die Umrechnung der empfangenen Komponenten I1 und Q1 geht ausfolgender Ableitung beispielhaft für QPSK-Signale hervor.

Mit $\omega$ als Kreisfrequenz der Trägerschwingung, $\Phi$ als wahrem Phasenwinkel eines übertragenen Symbols und $\psi$ als einer unbekannten Phasenverschiebung, welche das Signal auf dem Übertragungsweg erfährt, lautet die Schwingungen für das Eingangssignal 28)

$$\cos\left(\omega \cdot t + \phi + \psi\right)$$

Nach der beschriebenen Überlagerung in den Synchronmodulatoren 22 mit der Trägerschwingung, deren Phase $\delta$ am Ausgang der Trägerfrequenzsignal-Gewinnung 23 ebenso undefiniert ist, entsteht am Ausgang für die Inphase-Komponente eine Schwingung der folgenden Form

6

$$\cos(\omega \cdot t + \phi + \psi) \cdot \cos(\omega \cdot t + \delta)$$

und für die Quadraturkomponente die Schwingung

$$\cos(\omega \cdot t + \phi + \psi) \cdot \cos\left(\omega \cdot t + \delta + \frac{\pi}{2}\right)$$

Nach der Filterung der Signale in den Tiefpassfiltern 25 verbleibt für die Quadraturkomponente Q1 das Signal

$$\cos(\psi - \delta) \cdot \sin(\phi) + \sin(\psi - \delta) \cdot \cos(\phi)$$

und für die Inphase-Komponente I1

$$\cos(\psi - \delta) \cdot \cos(\phi) - \sin(\psi - \delta) \cdot \sin(\phi)$$

Bei Kenntnis der Winkeldifferenz $\psi - \delta$ können die empfangenen Komponenten I1 und Q1 in die wahren Werte I und Q umgerechnet werden.
Bei Empfang eines als Phasen-Referenzsignals 15 ausgesendetes Pilotsymbol 16 mit dem bekannten Pilotsymbol-Phasenwinkel $\Phi p$ kann aus dem zugehörigen empfangenen Pilotsymbol 16a mit den Komponenten Ip 1 und Qp1 die Winkeldifferenz $(\psi - \delta)$ aus folgenden Funktionen angegeben werden.

$$\cos(\psi - \delta) = (Qp1 \cdot \sin(\phi p) + \cos(\phi p) \cdot Ip1)$$

und

$$\sin(\psi - \delta) = (\cos(\phi p) \cdot Qp1 - Ip1 \cdot \sin(\phi p))$$

Diese Winkelverschiebung erfahren ebenso alle Signale, die als Nutzsymbole 18 ausgesendet werden und im Empfänger als Nutzsymbole 18a um diesen Winkelunterschied verschoben auftreten. In Fig. 8 ist diese Situation dargestellt. Dort ist ein Pilotsymbol 16 mit dem bekannten Pilotsymbol- Phasenwinkel $\Phi p = \pi/4$ und seinen wahren Komponenten I und Q in und das zugehörige empfangene Pilotsymbol 16a in ein Winkel-Diagramm eingetragen. Ebenso sind ein Nutzsymbol 18 und das zugehörige, um denselben Winkel $\psi - \delta$ verschobene empfangene Nutzsymbol 18a eingetragen.
Die oben genannten Funktionen für die Winkeldifferenz $(\psi - \delta)$ können in der schnell arbeitenden Rechnereinrichtung 27a an Hand der empfangenen Komponenten Ip 1 und Qp1 und dem bekannten Pilotsymbol- Phasenwinkel $\Phi p$ berechnet werden. Für alle auf ein Phasen-Referenzsignal 15 folgenden empfangenen Nutzsymbole 18 kann die Winkeldifferenz innerhalb eines hinreichend kleinen zeitlichen Abstands TW nach der Erfindung als konstant angesehen werden. Innerhalb eines jeden zeitlichen Abstands TW können demnach die wahren Komponenten I und Q aus den empfangenen Komponenten I1 und Q1 der Nutzsymbole 18 in der Rechnereinrichtung 27a in Echtzeit berechnet und an ihrem Ausgang abgenommen werden. Aus den obigen Beziehungen kann die Quadraturphase-Komponente wie folgt angegeben werden

$$Q = \sin(\phi p) \cdot (Q1 \cdot Qp1 + I1 \cdot Ip1) - \cos(\phi p) \cdot (Q1 \cdot Ip1 - I1 \cdot Qp1)$$

Und die Inphase-Komponente lautet:

$$I = \cos(\phi p) \cdot (Q1 \cdot Qp1 + I1 \cdot Ip1) + \sin(\phi p) \cdot (Qp1 \cdot I1 - Q1 \cdot Ip1)$$

diese einfache und zu Berechnung wenig zeitaufwändige Transformation kann von einem Mikroprozessor nach dem

**EP 1 708 387 B1**

Stand der Technik in Echtzeit durchgeführt werden.

In beiden Komponenten ist jeweils noch eine Konstante enthalten, die jedoch bei Symmetrie der beiden Zweige gleich ist und bei der Ermittlung des Phasenwinkels Φ der Nutzsymbole 18 entfällt, denn es gilt:

$$\tan(\phi) = Q/I$$

In einer vorteilhaften Ausgestaltung der Erfindung kann die Häufigkeit der Aktualisierung der Bezugsphase an die Fahrgeschwindigkeit angepasst werden, so dass der zeitliche Abstand der Aktualisierung der Bezugsphase TW bei Verfügbarkeit entsprechender Phasen-Referenzsignale 15 variabel gestaltet ist. Die in der Zeit TW zurückgelegte Fahrstrecke sollte dabei nicht größer sein als vorzugsweise λ/20 aber keinesfalls größer als λ/5.

**Liste der Bezeichnungen**

Antennen A1,A2,A3,...
Diskret verfügbare Schaltstellungen S1,S2...
Antennenanlage 1
Antennen-Wechselschalter 2
Empfänger 3
Antennenteile 4a,4b,4c..
Empfangssignal 5
Antennenanschlussstelle 6
Diversity-Antennenanlage 7
Signalpegelprüfeinrichtung 8
sektorales Richtdiagramm 9
Taktsignal 10
Wechsel-Signal 11
logic-Schaltung 12
Empfangspegel 13
Burst-Signal 14
Phasen-Referenzsignale 15
Pilotsymbol 16
Antennenwechsel-Zeitpunkt 17
Nutzsymbole 18
MPSK-Demodulator 19
Signalverzweigung 21
Synchronmodulator 22
Trägerfrequenzsignal-Gewinnung 23
π/2-Phasendrehglied 24
Tiefpassfilter 25
Taktableitung 26
Einrichtung 27 zur Auswertung der Phasen-Referenzsignale (15)
Rechnereinrichtung 27a
Demodulator-Eingangssignal 28
Symboltakt 29
Symboldauer T
zeitlicher Abstand der Aktualisierung der Bezugsphase TW
Rahmenfrequenz FR
Rahmendauer TR
Burst-Signal-Dauer TB
Fahrstrecke s
Freiraumwellenlänge λ
Trägerfrequenz f
Träger-Kreisfrequenz ω
Zeit t

Detektierte Inphase-Komponente I1
Detektierte Quadraturphase-Komponente Q1
Wahre Inphase-Komponente I
Wahre Quadraturphase-Komponente Q
Detektierter Symbol-Phasenwinkel $\Phi1$
Wahrer Symbol-Phasenwinkel $\Phi$
Detektierter Pilotsymbol- Phasenwinkel $\Phi p1$
Pilotsymbol- Phasenwinkel $\Phi p$
Unbekannte Phasenverschiebung des empfangenen Signals $\psi$
Unbekannte Phase des Überlagerungssignals $\delta$

**Patentansprüche**

1. Empfangsanlage für ein Fahrzeug, mit Diversity-Antennenanlage (7) und Empfänger (3) zum Empfang von Satelliten-Funksignalen und/oder terrestrisch ausgestrahlten Funksignalen der Wellenlänge $\lambda$, die digital MPSK-moduliert sind, in einem Fahrzeug, wobei die Diversity-Antennenanlage (7) zum wechselweisen Durchschalten einer von mindestens zwei verfügbaren Antennen (A1,A2,A3,...) mit einer Signalpegelprüfeinrichtung (8) versehen ist, welche die Notwendigkeit des Antennenwechsels zur Vermeidung von Signalschwund durch ein Signal anzeigt, **dadurch gekennzeichnet, dass** im ausgesendeten MPSK-Signal Phasen-Referenzsignale (15) vorhanden sind, welche in zeitlicher Folge wiederholend auftreten, und dass im Empfänger eine Einrichtung (27) zur Auswertung von zwischen aufeinander folgenden Burst-Signalen (14) eingefügten Pilot-Symbolen (16) vorhanden ist derart, dass bei Auftreten eines Pilot-Symbols (16), welches die auf das Empfangssignal bezogene aktuelle Bezugsphase trägt, letztere im Empfänger aktualisiert ist, wodurch die nachfolgend gesendeten Nutzsymbole phasenrichtig detektiert werden und der zeitliche Abstand (TW) zwischen zeitlich aufeinander folgenden Aktualisierungen der Bezugsphase derart klein ist, dass die zurückgelegte Wegstrecke nicht größer ist als $\lambda/5$ und der aufgrund vorgegebener Kriterien notwendige Antennenwechsel blockiert ist mit Ausnahme jeweils eines Zeitintervalls vor jeder Aktualisierung der Bezugsphase.

2. Empfangsanlage nach Anspruch 1, **dadurch gekennzeichnet, dass** diese für den Empfang von QPSK-Funksignalen gestaltet ist.

3. Empfangsanlage nach Anspruch 1 oder 2, **dadurch gekennzeichnet, dass** in der Diversity-Antennenanlage (7) eine logic-Schaltung (12) vorhanden ist, welcher sowohl der Symboltakt (T) als auch der Rahmentakt (TR,TB) sowie der Takt (TW) der Phasen-Referenzsignale (15) zugeführt ist, und welche nach einem vorgegebenen Kriterium die Notwendigkeit eines Antennenwechsels durch ein Wechsel-Signal (11) anzeigt und bei Auftreten des Wechsel-Signals (11) der Antennenwechsel jedoch durch die logic-Schaltung zunächst blockiert ist und nur anhand der in der logic-Schaltung (12) vorliegenden Taktsignale (10) koordiniert vor dem Auftreten eines Phasen-Referenzsignals (15) durchgeführt wird in der Weise, dass die Bezugsphase für das gewechselte Antennensignal nach dem Antennenwechsel für die Detektion der nachfolgenden Symbole zur Verfügung steht.

4. Empfangsanlage nach Anspruch 1 bis 3, **dadurch gekennzeichnet, dass** bei Aussendung von Phasen-Referenzsignalen (15) in Form von einer entsprechenden Anzahl von Pilotsymbolen (16), welche jeweils zeitlich zwischen aufeinander folgenden Burst-Signalen (14) durch Unterteilung der Rahmendauer (TR) in den Datenstrom eingefügt ist, die Aktualisierung der Bezugsphase im Empfänger jeweils mit Hilfe der Burst-Signale (14) und der Pilotsymbole (16) erfolgt und durch eine hinreichende Anzahl von Pilotsymbolen (16), der zeitliche Abstand (TW) zwischen zeitlich aufeinander folgenden Aktualisierungen der Bezugsphase hinreichend klein ist.

5. Empfangsanlage nach Anspruch 3, **dadurch gekennzeichnet, dass** die logic-Schaltung (12) derart gestaltet ist, dass der Antennenwechsel im letzten Symbol vor dem Auftreten eines Phasen-Referenzsignals (15), d. h. einem Pilotsignal bzw. einem Burst-signal (14), durch die "logic"-Schaltung (12) herbeigeführt ist.

6. Empfangsanlage nach einem der Ansprüche 1 bis 5, **dadurch gekennzeichnet, dass** der Empfangspegel (13) der aktuell durchgeschalteten Antenne (A1,A2,A3,...) ermittelt ist und der aktuelle Empfangspegel (13) mit den Empfangspegeln (13) der vorher aufgeschalteten Antennen (A1,A2,A3,...) verglichen und eine Rangliste bezüglich der Größe ihrer Empfangspegel (13) ermittelt ist, und bei Feststellung der Notwendigkeit des Antennenwechsels zu einer anderen Antenne - vorzugsweise zu der die Rangliste anführenden Antenne - dieser im Zeitintervall unmittelbar vor der darauf folgenden Aktualisierung der Bezugsphase erfolgt.

7. Empfangsanlage nach Anspruch 6, **dadurch gekennzeichnet, dass** im Empfänger (3) der Empfangspegel (13) der aktuell durchgeschalteten Antenne (A1,A2,A3,...) ermittelt und einer logic-Schaltung (12) zugeführt ist und die logic-Schaltung (12) derart gestaltet ist, dass der aktuelle Empfangspegel (13) mit den Empfangspegeln (13) der vorher aufgeschalteten Antennen (A1,A2,A3,...) mit Hilfe einer in der logic-Schaltung (12) vorhandenen Signalpegelprüfeinrichtung (8) verglichen wird.

8. Empfangsanlage nach einem der Ansprüche 1 bis 7, **dadurch gekennzeichnet, dass** das Kriterium zur Feststellung der Notwendigkeit des Antennenwechsels in der Unterschreitung eines für die sichere Detektion der empfangenen Signale notwendigen Pegels besteht.

9. Empfangsanlage nach Anspruch 6 oder 7, **dadurch gekennzeichnet, dass** die vergleichende Feststellung der Empfangspegel (13) der Antennen (A1,A2,A3,...) durch Umschalten des Antennen-Wechselschalters (2) von der aktuell aufgeschalteten Antenne auf die jeweils im Hinblick auf ihren Empfangspegel zu vergleichende Antenne, durch Erfassung einer Empfangspegel-Probe und Rückschalten auf die ursprünglich aufgeschaltete Antenne zur Vorbereitung eines möglichen Antennenwechsels in dem Zeitraum erfolgt, welcher für den Antennenwechsel blockiert ist.

10. Empfangsanlage nach einem der Ansprüche 1 bis 9, **dadurch gekennzeichnet, dass** die Einrichtung (27) zur Auswertung der Phasen-Referenzsignale (15), welche die bekannte Bezugsphase $\Phi p$ vermittelt, derart gestaltet ist, dass das empfangene Phasen-Referenzsignal (15) mit seiner aufgrund des Übertragungsweges unbekannten Verschiebung um den Phasenwinkel $\psi$ und eine aus dem empfangenen Signal abgeleitete Trägerfrequenz-Schwingung mit ebenso unbekannter Verschiebung um den Phasenwinkel $\delta$, sowie eine um den Winkel $\pi/2$ in der Phase verschobenes Signal dieser Trägerfrequenz-Schwingung jeweils dem empfangenen Phasen-Referenzsignale (15) überlagert sind, so dass die Inphase-Komponente Ip1 und die Quadraturkomponente Qp1 gegeben sind und eine Rechnereinrichtung (27a) vorhanden ist, in welcher anhand der beiden festgestellten Komponenten Ip1 und Qp1 und anhand der bekannten Bezugsphase $\Phi p$ die wahren Werte der Inphase-Komponente Ip und der Quadraturkomponente Qp und somit der aktuelle Winkelunterschied $\psi\text{-}\delta$ zwischen der Bezugsphase $\Phi p$ und dem der Inphase-Komponente Ip1 und der Quadraturkomponente Qp1 entsprechenden Winkel rechnerisch ermittelt ist und analog hierzu für alle dem Phasen-Referenzsignal (15) zeitlich folgenden Datensignale die wahren Werte der Inphase-Komponente I und der Quadraturkomponente Q aus der festgestellten Inphase-Komponente I1 und der Quadraturkomponente Q1 anhand des aktuellen Winkelunterschieds $\psi\text{-}\delta$ ermittelt sind.

11. Empfangsanlage nach Anspruch 10, **dadurch gekennzeichnet, dass** anhand des aktuell ermittelten Winkelunterschieds $\psi\text{-}\delta$ für alle dem Phasen-Referenzsignal (15) zeitlich folgenden MPSK-Empfangssignale (5) die wahren Werte der Inphase-Komponente I und der Quadraturkomponente Q aus der jeweils am Ausgang der Überlagerung vorliegenden Inphase-Komponente I1 und der Quadraturkomponente Q1 in analoger Weise rechnerisch ermittelt sind.

12. Empfangsanlage nach Anspruch 9 und 10, **dadurch gekennzeichnet, dass** in einem MPSK-Demodulator (19) eine Signalverzweigung (21) vorhanden ist, von welcher das Eingangssignal (28) jeweils einem von zwei Synchronmodulatoren (22) sowie einer Einrichtung zur Trägerfrequenzsignal-Gewinnung (23) und einer Einrichtung zur Taktableitung (26) zugeführt ist und das Ausgangssignal der Trägerfrequenzsignal-Gewinnung (23) einem der beiden Synchronmodulatoren (22) in der Ursprungsphase und dem anderen um den Winkel $\pi/2$ verschoben zugeführt ist und die Ausgangssignale der Synchronmodulatoren (22) jeweils nach einer Filterung in einem Tiefpassfilter (25) der Rechnereinrichtung (27a) zugeführt sind und in dieser, gesteuert durch den Symboltakt (29) am Ausgang der Taktableitung (26), die Umrechnung von den empfangenen Werten der Inphase-Komponente Ip1 bzw. I1 und der Quadraturkomponente Qp1 bzw. Q1 in die jeweils wahren Werte der Inphase-Komponente I bzw. Ip und der Quadraturkomponente Qp bzw. Q gegeben ist, und diese am Ausgang des MPSK-Demodulators (19) vorliegen.

13. Empfangsanlage nach einem der Ansprüche 1 bis 12, **dadurch gekennzeichnet, dass** die Häufigkeit der Aktualisierung der Bezugsphase an die Fahrgeschwindigkeit angepasst ist, so dass der zeitliche Abstand der Aktualisierung der Bezugsphase (TW) bei Verfügbarkeit entsprechend häufig aufeinander folgender Phasen-Referenzsignale (15) in der Weise variabel gestaltet ist, dass die Aktualisierung der Bezugsphase nur bei Auftreten solcher Phasen-Referenzsignale (15) erfolgt, und dass die im zeitlichen Abstand der Aktualisierung der Bezugsphase (TW) zurückgelegte Fahrstrecke dabei nicht größer ist als vorzugsweise $\lambda/20$ aber nicht größer ist als $\lambda/5$.

Claims

1.   A reception system for a vehicle comprising a diversity antenna system (7) and a receiver (3) for the reception of satellite radio signals and/or terrestrially transmitted radio signals, which have the wavelength λ and which are digitally MPSK modulated, in a vehicle, wherein the diversity antenna system (7) is provided with a signal level testing device (8) for the alternating interconnection of one of at least two available antennas (A1, A2, A3,...), which signal level testing device indicates the necessity of the antenna change to avoid signal loss by a signal, **characterized in that** phase reference signals (15) are present in the transmitted MPSK signal and occur repeatedly in a time sequence; and **in that** a device (27) is present in the receiver for evaluating pilot symbols (16) inserted between consecutive burst signals (14) such that, on the occurrence of a pilot symbol (16) which carries the prevailing reference phase related to the received signal, said prevailing reference phase is updated in the receiver, whereby the use symbols which are subsequently transmitted are detected in the correct phase and the interval in time (TW) between updates of the reference phase following one another in time is so small that the covered path distance is not larger than λ/5 and the antenna change which is necessary due to predefined criteria is blocked with the exception of a respective one time interval before each update of the reference phase.

2.   A reception system in accordance with claim 1, **characterized in that** it is configured for the reception of QPSK radio signals.

3.   A reception system in accordance with claim 1 or claim 2, **characterized in that** a logic circuit (12) is present in the diversity antenna system (7), to which logic circuit both the symbol clock (T) and the frame clock (TR, TB) as well as the clock (TW) of the phase reference signals (15) are supplied and which logic circuit indicates the necessity of an antenna change by way of a change signal (11) in accordance with a predefined criterion and the antenna change is, however, first blocked by the logic circuit on the occurrence of the change signal (11) and is only carried out in a coordinated manner with reference to the clock signals (10) present in the logic circuit (12) before the occurrence of a phase reference signal (15) in such a manner that the reference phase for the changed antenna signal is available for the detection of the following symbols after the antenna change.

4.   A reception system in accordance with claims 1 to 3, **characterized in that,** on the transmission of phase reference signals (15) in the form of a corresponding number of pilot symbols (16) which are each inserted into the data flow between consecutive burst signals (14) in time by a division of the frame duration (TR), the updating of the reference phase in the receiver respectively takes place with the aid of the burst signals (14) and the pilot signals (16) and the interval in time (TW) between updates of the reference phase following one another in time is sufficiently small due to a sufficient number of pilot symbols (16).

5.   A reception system in accordance with claim 3, **characterized in that** the logic circuit (12) is configured such that the antenna change is brought about by the logic circuit (12) in the last symbol before the occurrence of a phase reference signal (15), i.e. in a pilot signal or in a burst signal (14).

6.   A reception system in accordance with any one of the claims 1 to 5, **characterized in that** the reception level (13) of the prevailing interconnected antenna (A1, A2, A3,...) is determined and the prevailing reception level (13) is compared with the reception levels (13) of the previously connected antennas (A1, A2, A3,...) and a ranking list with respect to the magnitude of their reception levels (13) is determined and the antenna change takes place in the time interval directly before the following update of the reference phase on determining the necessity of the antenna change with respect to a different antenna - preferably with respect to the antenna heading the ranking list.

7.   A reception system in accordance with claim 6, **characterized in that** the reception level (13) of the prevailing interconnected antenna (A1, A2, A3,...) is determined in the receiver (3) and is supplied to a logic circuit (12) and the logic circuit (12) is configured such that the prevailing reception level (13) is compared with the reception levels (13) of the previously connected antennas (A1, A2, A3,...) with the aid of a signal level testing device (8) present in the logic circuit (12).

8.   A reception system in accordance with any one of the claims 1 to 7, **characterized in that** the criterion for determining the necessity of the antenna change comprises a level necessary for the reliable detection of the received signals being fallen below.

9.   A reception system in accordance with claim 6 or claim 7, **characterized in that** the comparative determination of the reception levels (13) of the antennas (A1, A2, A3,...) takes place by a switching over of the antenna change switch (2) from the prevailing connected antenna to the respective antenna to be compared with respect to its reception level; by a detection of a reception level sample; and by a switching back to the originally connected antenna for a preparation of a possible antenna change in the period of time which is blocked for the antenna change.

10. A reception system in accordance with any one of the claims 1 to 9, **characterized in that** the device (27) for evaluating the phase reference signals (15) and which communicates the known reference phase $\Phi p$ is configured such that the received phase reference signal (15) with its displacement by the phase angle $\psi$ which is unknown due to the transmission path, and a carrier frequency oscillation derived from the received signal with an equally unknown displacement by the phase angle $\delta$, as well as a signal of this carrier frequency oscillation displaced in phase by the angle $\pi/2$ are each superimposed on the received phase reference signals (15) such that the in-phase component Ip1 and the quadrature component Qp1 are present and a calculation device (27a) is present in which the true values of the in-phase component Ip and of the quadrature component Qp and thus the prevailing angle difference $\psi$-$\delta$ between the reference phase $\Phi p$ and the angle corresponding to the in-phase component Ip1 and to the quadrature component Qp1 are determined by calculation using the two determined components Ip1 and Qp1 and using the known reference phase $\Phi p$ and, analog to this, the true values of the in-phase component I and of the quadrature component Q are determined for all of the data signals following the phase reference signal (15) in time from the determined in-phase component 11 and from the quadrature component Q1 using the prevailing angle difference $\psi$-$\delta$.

11. A reception system in accordance with claim 10, **characterized in that** the true values of the in-phase component I and of the quadrature component Q are determined by calculation in an analog manner using the prevailing determined angle difference $\psi$-$\delta$ for all of the received MPSK signals (5) following the phase reference signal (15) in time from the in-phase component 11 and from the quadrature component Q1 respectively present at the output of the superimposition.

12. A reception system in accordance with claim 9 and claim 10, **characterized in that** a signal branch (21) is present in an MPSK demodulator (19), from which signal branch the input signal (28) is respectively supplied to one of two synchronous modulators (22) and to a device for carrier frequency signal acquisition (23) and to a device for clock extraction (26) and the output signal of the carrier frequency signal acquisition (23) is supplied to one of the two synchronous modulators (22) in the original phase and is supplied to the other synchronous modulator displaced by the angle $\pi/2$ and the output signals of the synchronous modulators (22) are each supplied to the calculation device (27a) after a filtering in a low-pass filter (25) and the conversion of the received values of the in-phase component Ip1 or 11 and of the quadrature component Qp1 or Q1 into the respective true values of the in-phase component I or Ip and of the quadrature component Qp or Q is present in said calculation device, controlled by the symbol clock (29) at the output of the clock extraction (26), and said true values are present at the output of the MPSK demodulator (19).

13. A reception system in accordance with any one of the claims 1 to 12, **characterized in that** the frequency of occurrence of the updating of the reference phase is adapted to the travel speed so that the interval in time of the updating of the reference phase (TW) is variably formed on the availability of phase reference signals (15) following one another in a correspondingly frequent manner in such a manner that the updating of the reference phase only takes place on the occurrence of such phase reference signals (15) and that the travel path covered in the interval in time of the updating of the reference phase (TW) is in this respect not larger than preferably $\lambda/20$, but is not larger than $\lambda/5$.

**Revendications**

1. Installation de réception pour un véhicule, comportant une installation d'antenne en diversité (7) et un récepteur (3) pour recevoir des signaux radio par satellite et/ou des signaux radio émis par voie terrestre de la longueur d'onde $\lambda$, qui sont modulés en MPSK par voie numérique, dans un véhicule, dans laquelle l'installation d'antenne en diversité (7) est pourvue d'un dispositif de contrôle de niveau de signal (8) pour la commutation en alternance de l'une parmi au moins deux antennes disponibles (A1, A2, A3, ...), dispositif qui indique par un signal la nécessité d'un changement d'antenne pour éviter un évanouissement de signal,
**caractérisée en ce que**
dans le signal MPSK émis existent des signaux de référence de phase (15) qui apparaissent en récurrence en succession temporelle, et
**en ce que** dans le récepteur existe un moyen (27) pour évaluer des symboles pilotes (16) insérés entre des signaux de salve successifs (14), de telle sorte que lors de l'apparition d'un symbole pilote (16) qui porte la phase de référence actuelle relative au signal de réception, ladite phase est mise à jour dans le récepteur, grâce à quoi les symboles utiles envoyés par la suite sont détectés en conformité de phase et l'intervalle de temps (TW) entre des mises à jour successives dans le temps de la phase de référence est si petit que le trajet parcouru n'est pas supérieur à $\lambda/5$, et que le changement d'antenne nécessaire en raison de critères donnés est bloqué, à l'exception d'un intervalle de temps respectif avant chaque mise à jour de la phase de référence.

**2.** Installation de réception selon la revendication 1,
**caractérisée en ce que**
celle-ci est conçue pour la réception de signaux radio QPSK.

**3.** Installation de réception selon la revendication 1 ou 2,
**caractérisée en ce que** dans l'installation d'antenne en diversité (7) existe un circuit logique (12) auquel sont amenées aussi bien l'horloge de symbole (T) que l'horloge de trame (TR, TB) ainsi que l'horloge (TW) des signaux de phase de référence (15), et qui indique par un signal alternatif (11) la nécessité d'un changement d'antenne selon un critère donné, et, lors de l'apparition du signal alternatif (11), le changement d'antenne est cependant tout d'abord bloqué par le circuit logique et est exécuté de façon coordonnée uniquement avant l'apparition d'un signal de référence de phase (15) en se basant sur les signaux d'horloge (10) présents dans le circuit logique (12), de telle sorte que la phase de référence pour le signal d'antenne changé après le changement d'antenne est disponible pour la détection des symboles suivants.

**4.** Installation de réception selon la revendication 1 à 3,
**caractérisée en ce que**
lors de l'émission de signaux de référence de phase (15) sous la forme d'un nombre correspondant de symboles pilotes (16) qui est inséré dans le temps dans le flux de données entre des signaux de salve successifs (14) par subdivision de la durée de trame (TR), la mise à jour de la phase de référence dans le récepteur s'effectue respectivement à l'aide des signaux de salve (14) et des symboles pilotes (16), et grâce à un nombre suffisant de symboles pilotes (16) l'intervalle dans le temps (TW) entre des mises à jour successives de la phase de référence est suffisamment petit.

**5.** Installation de réception selon la revendication 3,
**caractérisée en ce que**
le circuit logique (12) est conçu de telle sorte que le changement d'antenne est provoqué par le circuit logique (12) dans le dernier symbole avant l'apparition d'un signal de référence de phase (15), c'est-à-dire dans un signal pilote ou dans un signal de salve (14).

**6.** Installation de réception selon l'une des revendications 1 à 5, **caractérisée en ce que**
le niveau de réception (13) de l'antenne actuellement commutée (A1, A2, A3, ...) est déterminé et le niveau de réception actuel (13) est comparé aux niveaux de réception (13) des antennes commutées auparavant (A1, A2, A3, ...), et une liste de classement par rapport à l'importance de leurs niveaux de réception (13) est déterminée, et lors de la constatation de la nécessité du changement d'antenne pour passer à une autre antenne, de préférence à l'antenne qui est la première selon la liste de classement, ce changement s'effectue dans l'intervalle de temps directement avant la mise à jour suivante de la phase de référence.

**7.** Installation de réception selon la revendication 6,
**caractérisée en ce que**
dans le récepteur (3), le niveau de réception (13) de l'antenne commutée actuellement (A1, A2, A3, ...) est déterminé et amené à un circuit logique (12), et le circuit logique (12) est conçu de telle sorte que le niveau de réception actuel (13) est comparé aux niveaux de réception (13) des antennes commutées auparavant (A1, S2, A3, ...) à l'aide d'un moyen de contrôle de niveau de signal (8) existant dans le circuit logique (12).

**8.** Installation de réception selon l'une des revendications 1 à 7, **caractérisée en ce que**
le critère pour constater la nécessité du changement d'antenne consiste en le passage au-dessous d'un niveau nécessaire pour une détection sûre des signaux reçus.

**9.** Installation de réception selon la revendication 6 ou 7,
**caractérisée en ce que**
la constatation comparative des niveaux de réception (13) des antennes (A1, A2, A3, ...) s'effectue par commutation du commutateur de changement d'antenne (2) pour passer de l'antenne commutée actuellement à l'antenne respective à comparer à l'égard de son niveau de réception, par saisie d'un échantillon de niveau de réception et par commutation en retour vers l'antenne commutée initialement, afin de préparer un changement d'antenne possible dans l'intervalle de temps qui est bloqué pour le changement d'antenne.

**10.** Installation de réception selon l'une des revendications 1 à 9, **caractérisée en ce que**
le moyen (27) pour évaluer les signaux de référence de phase (15) qui communique la phase de référence connue $\Phi p$ est conçu de telle sorte que le signal de référence de phase (15) reçu, de par son déphasage de l'angle de phase $\psi$ inconnu en raison du trajet de transmission, et une oscillation de fréquence porteuse, déviée du signal reçu et ayant également un déphasage inconnu de l'ange de phase $\delta$, ainsi qu'un signal de cette oscillation de fréquence porteuse déphasé de l'angle $\pi/2$, sont chacun superposés au signal de référence de phase (15) reçu, de sorte que la composante en phase Ip1 et la composante en quadrature Qp1 sont données, et
il existe un moyen de calcul (27a) qui, en se basant sur les deux composantes constatées Ip1 et Qp1 et sur la phase de référence connue $\Phi p$, détermine par calcul les vraies valeurs de la composante en phase Ip et de la composante en quadrature Qp ainsi que la différence d'angle actuelle $\psi - \delta$ entre la phase de référence $\Phi p$ et l'angle correspondant à la composante en phase Ip1 et à la composante en quadrature Qp1, et
par analogie les vraies valeurs de la composante en phase I et de la composante en quadrature Q sont déterminées à partir de la composante en phase constatée I1 et de la composante en quadrature Q1 pour tous les signaux de données qui suivent dans le temps au signal de référence de phase (15), en se basant sur la différence d'angle actuelle $\psi - \delta$.

**11.** Installation de réception selon la revendication 10,
**caractérisée en ce que**
en se basant sur la différence d'angle $\psi - \delta$ déterminée actuellement, pour tous les signaux de réception MPSK (5) qui suivent dans le temps au signal de référence de phase (15), les vraies valeurs de la composante en phase I et de la composante en quadrature Q sont déterminées par calcul de façon analogue à partir de la composante en phase I1 et de la composante en quadrature Q1 présentes respectivement à l'issue de la superposition.

**12.** Installation de réception selon la revendication 9 et 10,
**caractérisée en ce que**
une ramification de signal (21) se présente dans un démodulateur MPSK (19), de laquelle le signal d'entrée (28) est amené à l'un de deux modulateurs synchrones (22) ainsi qu'à un moyen de récupération de signal de fréquence porteuse (23) et à un moyen de déviation d'horloge (26), et le signal de sortie de la récupération de signal de fréquence porteuse (23) est amené à l'un des deux modulateurs synchrones (22) dans la phase initiale et à l'autre avec déphasage de l'angle $\pi/2$, et les signaux de sortie des modulateurs synchrones (22) sont amenés, une fois filtrés dans un filtre passe-bas (25), au moyen de calcul (27a) et dans celui-ci la conversion des valeurs reçues de la composante en phase Ip1 ou I1 et de la composante en quadrature Qp1 ou Q1 en les vraies valeurs respectives de la composante en phase I ou Ip et de la composante en quadrature Qp ou Q est réalisée en étant commandée par l'horloge de symbole (29) à la sortie de la déviation d'horloge (26), et ces composantes se présentent à la sortie du démodulateur MPSK (19).

**13.** Installation de réception selon l'une des revendications 1 à 12, **caractérisée en ce que**
le nombre de fois de la mise à jour de la phase de référence est adapté à la vitesse de circulation, de sorte que l'intervalle dans le temps de la mise à jour de la phase de référence (TW), lors d'une disponibilité de signaux de référence de phase (15) qui se suivent un nombre de fois correspondant, est conçu de façon variable de telle sorte que la mise à jour de la phase de référence ne s'effectue que lors de l'apparition de tels signaux de référence de phase (15) et que le trajet de circulation parcouru à l'intervalle dans le temps de la mise à jour de la phase de référence (TW) n'est de préférence pas supérieur à $\lambda/20$ et n'est pas supérieur à $\lambda/5$.

Phasenverlauf der Empfangssignale von zwei Antennen A1 und A2 in Vielfachen von π/4

Fahrstrecke s in Wellenlängen

a)

Pegelverlauf der Empfangssignale von zwei Antennen und des jeweils größeren Signals bei Diversity

Fahrstrecke s in Wellenlängen

b)

Fig. 1

EP 1 708 387 B1

Fig. 2

Empfangspegel in Abhängigkeit der Fahrstrecke und Stützpunkte (unten) zur Phasennachstellung mit Antennendiversity in Abständen λ/20 der Fahrstrecke

Fahrstrecke s in Wellenlängen

a)

Phasenabweichung eines QPSK-Signals in Vielfachen von π/4 ohne und mit Antennendiversity mit Pilotsignalen

Fahrstrecke s in Wellenlängen

b)

Fig. 3

a)

b)

Fig. 4

EP 1 708 387 B1

Fig. 5a

Fig. 5b

Fig. 6

EP 1 708 387 B1

Durch eine weitere Antenne verursachte zusätzliche Diversity-Effizienz in
Abhängigkeit vom zeitlichen Abstand TW der Aktualisierung der Bezugsphase

Fig. 7

EP 1 708 387 B1

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1239608 A1

- EP 1394965 A1

**In der Beschreibung aufgeführte Nicht-Patentliteratur**

- **K.DAVID ; T.BENKNER.** Digitale Mobilfunksysteme. Verlag B.G.Teubner, 1996, 158